# EUROPEAN PATENT APPLICATION

(11) **EP 4 129 933 A1**
(43) Date of publication of application: **08.02.2023**
(21) Application number: 22188979.3
(22) Date of filing: 05.08.2022
(51) Int. Cl.: C02F 3/32, C02F 1/00, C02F 101/10

(54) **PHYTOREMEDIATION MODULE, AND PURIFICATION PLANT COMPRISING SUCH MODULE**

(30) Priority: 05.08.2021 IT 202100021266
(71) Applicant: Consiglio Nazionale Delle Ricerche, 00185 Roma (IT)
(72) Inventor: BRUNETTI, Patrizia, 01012 Capranica (Viterbo) (IT); MARZI, Davide, I-00077 Monte Compatri (Roma) (IT)
(74) Representative: Savoca, Agatino

(57) **Abstract**

A purification module comprises a plurality of tanks (1) adapted to contain water, a plurality of ducts (2, 3, 4) in fluid connection with the opposite ends of each tank (1) to allow the inlet of water at one end of a particular tank (1) and the drainage of water from the opposite end of said tank (1), and a plurality of plants (5) housed in the tanks (1) and adapted to exert a phytoremediation action on the water contained therein, wherein at least part of the tanks (1) is arranged on a plurality of superimposed planes in a vertical direction.

## Description

### Technical field

The present invention is, in general, in the field of water purification; in particular, the invention relates to a phytoremediation module, and an installation comprising said module.

### Summary of the invention

Phytoremediation installations using ferns for decontaminating wastewater, groundwater and surface water are known, such as the solution described in US 2004144155 A1.

However, said installations have the drawback of requiring large areas and/or involving long treatment times to achieve sufficient purification.

A further solution, although intended for a different purpose, is known for example from US 2017/049082 B2, which describes a structure dedicated to aquaponic culture systems, in which the main purpose is growing aquatic species which, as they produce waste, require a decontamination apparatus which uses bacterial cultures to decontaminate the water. An unspecified plant growth system is then added to take advantage of residual organic matter as fertilizer.

However, a system configured in this way must use three different biological systems, namely aquatic species, bacteria, and plant species, the co-culture of which requires considerable attention. Therefore, these systems do not maximize the phytoremediation function and are also difficult to scale.

Similarly, the solution known from US 7 718 063 B2 requires large spaces for its implementation, which makes it difficult to adjust and adapt to environments where a small horizontal footprint is required.

These limitations understandably undermine or limit the efficiency of the solutions according to the prior art.

To overcome the aforementioned problems, the present invention provides for supporting plants suitable for phytoremediation by means of a modular structure (with a vertically extending module) comprising a plurality of mutually connected (vertically stacked) tanks suitable to accommodate the plants, the water to be treated being introduced into said tanks for the plants to remove pollutants therefrom.

Vertical cultivation installations are known, but are exclusively designed for hydroponic culture for food or aquaponic purposes, and not for phytoremediation. An example of such a solution is known from EP 3231276 A1.

One object of the present invention, therefore, is to optimize the decontamination action of phytoremediation by means of vertical-type planting systems, which allow the treatment yield to be increased by taking advantage of the vertical development of the plant, so as to maximize the number of plants with the same horizontal footprint. The synergistic effect between vertical modularity and the selection of appropriate plant species, specifically chosen from contaminant-accumulating species, thus enables the removal of said contaminants to be optimized through the use of phytoremediation alone.

A purification module according to the present invention thus proves particularly advantageous when used for the dearsenification of drinking water and/or for the recovery of stormwater and industrial or mining wastewater.

Said effect may be effectively achieved by the use, in a module or installation made according to the present invention, of fern specimens of the species *Pteris vittata,* where currently the removal of arsenic from water is achieved by filtration systems using iron oxide ion-exchange resins or osmosis processes that are extremely costly in terms of implementation (requiring the preparation of large installations), management, and energy consumption.

A system according to the present invention may also be organized into scalable modules that may be adapted to different needs, whether for domestic or industrial use.

Preferably, there will be a hydraulic system that allows water to circulate and flow into the housing tanks of the plants for the phytodecontamination process.

The housings of the plants will then be conveniently configured to allow the plants to have only their roots submerged in water, which will not only undergo decontamination, but at the same time act as a nutrient for the maintenance and growth of the plants.

The module or installation may also comprise a lighting system and/or an air conditioning system (to control the temperature and humidity within the module), and/or sensors to monitor environmental conditions so that they are optimal for the plants.

Thus, with a module or installation according to the present invention, it will be possible to take advantage of even confined spaces, while maintaining high decontamination efficiency (particularly of arsenic), avoiding the production of secondary pollutant waste, and at the same time ensuring high scalability and adaptability to different needs and available environments.

The module or installation according to the present invention may also be used effectively for the purification of drinking water, and/or for the decarbonization of the air and the recovery of waste biomass, with a view to a virtuous process of circular economy.

The aforesaid and other objects and advantages are achieved, according to an aspect of the invention, by a purification module or installation having the features defined in the appended claims. Preferred embodiments of the invention are defined in the dependent claims.

### Brief description of the drawings

The functional and structural features of some preferred embodiments of a phytoremediation module or installation according to the invention will now be described. Reference is made to the accompanying drawings, wherein:
- Fig. 1A through 1C are, respectively, a perspective, longitudinal, and side view of a phytoremediation module, according to an embodiment of the present invention;
- Fig. 2A through 2C are, respectively, a perspective, side, and detail view of a phytoremediation module, according to an alternative embodiment of the present invention; and

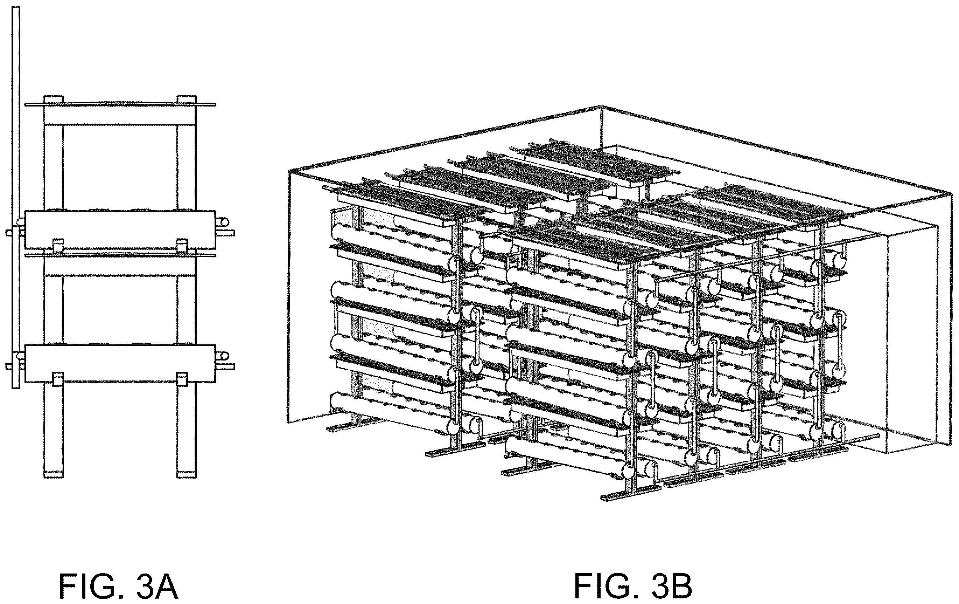

- Fig. 3A and 3B are, respectively, a longitudinal and perspective view of an installation comprising a plurality of phytoremediation modules side by side, according to an embodiment of the present invention.

### Detailed description

Before explaining in detail a plurality of embodiments of the invention, it should be clarified that the invention is not limited in its application to the design details and configuration of the components presented in the following description or illustrated in the drawings. The invention is able to assume other embodiments and to be implemented or constructed in practice in different ways. It should also be understood that the phraseology and terminology have a descriptive purpose and should not be construed as limiting.

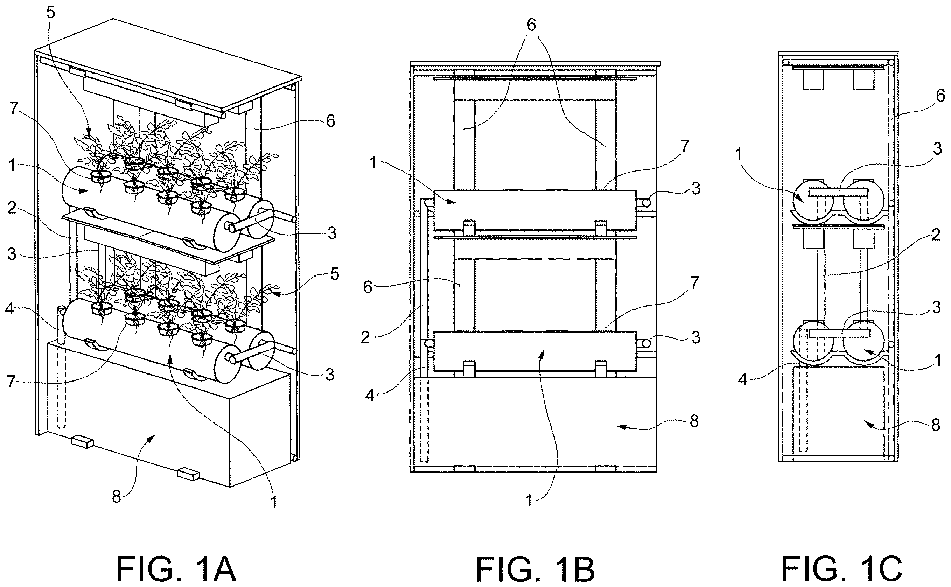

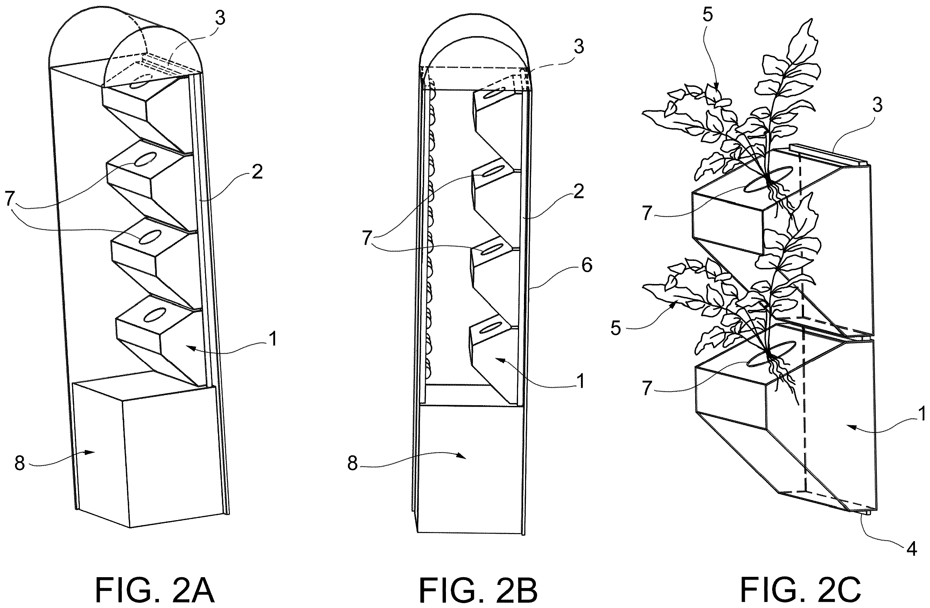

Referring by way of example to Fig. 1A to 2C, a purification module comprises a plurality of tanks 1, suitable for containing water, and a plurality of ducts 2, 3, 4 in fluid connection with the opposite ends of each tank 1.

Said ducts 2, 3, 4 are adapted to allow the inlet of water 2, 3 at one end of a particular tank 1 and the drainage of water from the opposite end of said tank 3, 4.

The purification module further comprises a plurality of plants 5 housed in tanks 1 and adapted to exert a phytoremediation action on the water contained in said tanks 1.

Said purification module may comprise a structure or frame 6 suitable to contain and support the tanks 1.

Moreover, at least part of the plurality of tanks 1 is arranged on a plurality of superimposed planes in a vertical direction (conveniently, in such a way that the tanks are mutually aligned one above the other).

According to a preferred embodiment, said plants 5 comprise specimens of *Pteris vittata*, adapted to purify the water from the presence of arsenic. Alternatively, or in combination, the plants 5 may comprise one or more specimens belonging to one or more species among *Cannabis sativa* (known to be able to remove Cd, Cu, Ni, Pb, and Zn), *Urtica dioica* (known to be able to remove Pb, Cd, As, and Ni), *Nicotiana tabacum* (known to be able to absorb Cd, Zn, Cu, Pb), *Brassica juncea* (known to be able to absorb Pb, Cd, and Zn), *Alyssum bertolonii* (known to be able to accumulate Ni), *Thlaspi caerulescens* (known to be able to absorb Cd and Zn), and *Commelina communis* (known to be able to accumulate Cu).

In a module so configured, the sequential passage of water between the various tanks 1 allows high decontamination efficiency to be achieved (up to, for example, 98% arsenic purification).

Preferably, the plurality of ducts 2, 3, 4 comprises a main delivery duct 2 in fluid connection with the tank 1 arranged at the highest vertical level, said main delivery duct 2 being capable of allowing water to enter the interior of said upper tank 1.

The plurality of ducts 2, 3, 4 may also comprise a plurality of secondary ducts 3, at least part of which is in fluid connection simultaneously with two tanks 1, so as to connect the drain of one tank 1 to the delivery of another tank 1.

The tanks 1 may then be fed separately or in cascade, depending on whether the ducts 3 are configured to connect the tanks 1 in series or in parallel.

Preferably, the plurality of ducts 2, 3, 4 comprise a main water drain duct 4 in fluid connection with the tank 1 arranged at the lowest vertical level, said main drain duct 4 being adapted to allow the water to drain from said tank 1.

Preferably, at least part of the ducts 2, 3, 4 and/or tanks 1 is inclined downwards in the direction of connection between the delivery and drain of the tanks 1, in such a way as to cause or facilitate the flow of water inside these ducts 2, 3, 4 and/or tanks 1. Conveniently, therefore, at least part of the ducts 2, 3, 4 and/or tanks 1 is inclined downwards, with respect to a horizontal plane (e.g., the floor plane on which the support structure of the module rests).

Conveniently, the angle of inclination of at least part of the ducts 2, 3, 4 and/or tanks 1, with respect to a horizontal plane, is between 0.1° and 90°.

According to one embodiment (schematically illustrated in Fig. 1A to 1C), the tanks 1 have a cylindrical body extending axially between two end faces, in fluid connection with at least two ducts 2, 3, 4, specifically delivery ducts 2, 3 and drain ducts 3, 4, respectively. The cylindrical body has one or more housings 7, comprising openings connected to the outside of the cylindrical body and configured to house at least one plant 5, in such a way that the top part of said plant 5 protrudes outside the cylindrical body, while the roots may come into contact with the water to be purified, when the latter is inside the cylindrical body.

According to an alternative embodiment (schematically illustrated in Fig. 2A to 2C), the tanks 1 have a box-like body having two lateral faces, in fluid connection with at least two ducts 2, 3, 4, specifically delivery ducts 2, 3 and drain ducts 3, 4, respectively. The box-like body has one or more housings 7, comprising openings connected to the outside of the box-like body and configured to house at least one plant 5, in such a way that the top part of said plant 5 protrudes outside the box-like body, while the roots may come into contact with the water to be purified, when the latter is inside the box-like body.

Conveniently, the face of the box-like body that has the one or more openings housing the plants 5 is inclined downwards, with respect to a horizontal plane. This is particularly useful when there is an artificial lighting system conveniently placed in front of the column of tanks 1, so that the plant may be optimally hit by the light, while maximizing the density of tanks 1 per unit of volume, since the box-like shape of the body lends itself well to stacking the tanks 1 even in close contact with each other.

There may also be a main tank 8, adapted to contain at least part of the water to be purified, and in fluid connection with at least one of the plurality of ducts 2, 3, 4.

Preferably, said at least one of the plurality of ducts 2, 3, 4 in fluid connection with the main tank 8 is configured exclusively to convey the water from the main tank 8 to at least one of the tanks 1 (conveniently, the tank 1 positioned at the highest level).

The module may be configured as an open circuit, when the return to the main tank 8 of the water that passes through at least one of the tanks 1 is avoided (unlike, for example, traditional aquaponic installations), so that the water to be purified, according to this embodiment, is taken from a tank, made to pass through the tanks, and conveyed to an outlet, without being reintroduced into the tank 8.

There may also be a pump, designed to circulate the water between the ducts 2, 3, 4 and the tanks 1.

According to one embodiment, when the module is suitable, for example, for the phytoremediation of drinking water (or to be treated by purification), there may be a filter downstream of at least one tank 1 (in the case of tanks 1 connected in series, it will be the tank furthest downstream with respect to the direction of the water flow), this filter being configured to remove particulate matter that may be present in the water. In this context, particulate matter is defined as particles of material likely to cloud water (such as clay, sediment, colloidal particles, and microorganisms), having sizes between 1 nm and 1 mm.

According to a further aspect of the invention, a purification installation comprises a plurality of purification modules according to any of the above-described embodiments, said modules being arranged side by side laterally and/or vertically.

Preferably, the modules comprised in the installation will be configured in such a way that at least part of the ducts 2, 3, 4 connect the drain of at least part of the tanks 1 to the delivery of the tanks 1 respectively adjacent to each other, and/or in such a way that at least part of the ducts 2, 3, 4 connect the drain of at least part of the tanks 1 to the delivery of the tanks 1 respectively located at a lower level in the vertical direction.

According to one embodiment of the invention, a method for phytoremediation of water comprises the steps of providing a water purification module or installation, according to any of the embodiments described above, and feeding into said module or installation a flow of drinking water or water to be purified, to be subjected to the phytoremediation treatment.

Various aspects and embodiments of a phytoremediation module and an installation comprising said module according to the invention have been described. It is understood that each embodiment may be combined with any other embodiment. Moreover, the invention is not limited to the embodiments described, but may be varied within the scope defined by the appended claims.

## Claims

1. Purification module, comprising:
- a plurality of tanks (1), suitable for containing water;
- a plurality of ducts (2, 3, 4), in fluid connection with the opposite ends of each tank (1), said ducts (2, 3, 4) being adapted to allow the inlet of water at one end of a particular tank (1) and the drainage of water from the opposite end of said tank (1); and
- a plurality of plants (5), housed in the tanks (1) and adapted to exert a phytoremediation action on the water contained in said tanks (1), said plurality comprising one or more plants (5) belonging to one or more species selected from the group consisting of *Cannabis sativa, Urtica dioica, Nicotiana tabacum, Brassica juncea, Alyssum bertolonii, Thlaspi caerulescens, Commelina communis* and *Pteris vittata*;
wherein at least part of the plurality of tanks (1) is arranged in several superimposed planes in the vertical direction.

2. Module according to any one of the preceding claims, wherein the plurality of ducts (2, 3, 4) comprises a main delivery duct (2), in fluid connection with the tank (1) arranged at the highest vertical level, said main delivery duct (2) being adapted to allow the inlet of water into said upper tank (1).

3. Module according to any one of the preceding claims, wherein the plurality of ducts (2, 3, 4) comprises a plurality of secondary ducts (3), at least part of which being in fluid connection with two tanks (1), so as to connect the drain of one tank (1) to the delivery of another tank (1).

4. Module according to any one of the preceding claims, wherein at least part of the ducts (2, 3, 4) and/or of the tanks (1) is inclined downwards in the direction of connection between the delivery and drain of the tanks (1), in such a way as to cause or facilitate the flow of water inside said ducts (2, 3, 4) and/or tanks (1).

5. Module according to claim 4, wherein the angle of inclination of at least part of the ducts (2, 3, 4) and/or of the tanks (1) is between 0.1° and 90°.

6. Module according to any one of the preceding claims, wherein the tanks (1) have a cylindrical body extending axially between two end faces, in fluid connection with two ducts (2, 3, 4,), respectively a delivery duct (2, 3) and a drain duct (3, 4), said cylindrical body comprising one or more housings (7), which have openings connected to the outside of the cylindrical body and are configured to house at least one plant (5), in such a way that the top part of said plant (5) protrudes outside the cylindrical body, while the roots of said plant (5) may come into contact with the water to be purified, when said water is inside the cylindrical body.

7. Module according to any one of claims 1 to 5, wherein the tanks (1) have a box-like body having two lateral faces, in fluid connection with two ducts (2, 3, 4), respectively the delivery duct (2, 3) and the drain duct (3, 4), said box-like body comprising one or more housings (7), which have openings connected to the outside of the box-shaped body and are configured to house at least one plant (5), in such a way that the top part of said plant (5) protrudes outside the box-like body, while the roots of said plant (5) may come into contact with the water to be purified, when said water is inside the box-like body.

8. Module according to claim 7, wherein the face of the box-like body, which has one or more openings housing the plants (5), is inclined downwards, with respect to a horizontal plane.

9. Module according to any one of the preceding claims, comprising a main tank (8), adapted to contain at least part of the water to be purified, and in fluid connection with at least one of the plurality of ducts (2, 3, 4).

10. Module according to claim 9, wherein said at least one of the plurality of ducts (2, 3, 4) in fluid connection with the main tank (8) is configured exclusively to convey the water of the main tank (8) towards at least one of the tanks (1).

11. Module according to any of the preceding claims, comprising a pump, suitable to circulate the water between the ducts (2, 3, 4) and the tanks (1).

12. Module according to any one of the preceding claims, suitable for the phytoremediation of drinking water, comprising a filter downstream of at least one tank (1), said filter being configured to remove particulate matter from the water having dimensions in a range between 1 nm and 1 mm.

13. Purification installation, comprising a plurality of purification modules according to any one of the preceding claims, arranged side-by-side laterally and/or vertically.

14. Installation according to claim 13, wherein the purification modules are configured in such a way that at least part of the ducts (2, 3, 4) connect the drains of at least part of the tanks (1) to the delivery of the tanks (1) respectively adjacent, and/or in such a way that at least part of the ducts (2, 3, 4) connect the drains of at least part of the tanks (1) to the delivery of the tanks (1) respectively placed on a lower level in the vertical direction.

15. Method for the phytoremediation of water, comprising the phases of:
a) providing a purification module or installation, according to any one of the preceding claims; and
b) introducing into said module or installation a flow of drinking water or water to be purified, to be subjected to the phytoremediation treatment.
